# EUROPEAN PATENT APPLICATION

(11) **EP 3 241 428 A1**
(43) Date of publication of application: **08.11.2017**
(21) Application number: 15875552.0
(22) Date of filing: 08.12.2015
(51) Int. Cl.: A01G 9/24, A01G 9/14

(54) **OPENABLE VINYL FIXING DEVICE AND VINYL GREENHOUSE INCLUDING SAME**

(30) Priority: 31.12.2014 KR 20140195816; 21.01.2015 KR 20150010101
(71) Applicant: Kim, Jin Joo, Pyeongchang-gun, Gangwon-do 25343 (KR)
(72) Inventor: Kim, Jin Joo, Pyeongchang-gun, Gangwon-do 25343 (KR)
(74) Representative: BRP Renaud & Partner mbB Rechtsanwälte Patentanwälte Steuerberater
(86) International application number: PCT/KR2015/013367
(87) International publication number: WO 2016/108458

(57) **Abstract**

The present invention relates to an openable vinyl fixing device and a vinyl greenhouse. The openable vinyl fixing device enables easy opening and closing of an openable window formed on a roof. In contrast with the conventional fixed idea that when a vinyl opening operator (opener) is positioned at the lowermost end of vinyl, a vinyl supporting pipe does not completely unwind vinyl of a vinyl window, but slightly winds the vinyl, and the vinyl supporting pipe is positioned at the outer portion of the vinyl window, the present invention enables the vinyl to be completely unwound by rotating the vinyl supporting pipe a little bit more when closing the vinyl window, wherein the vinyl supporting pipe is positioned between an arc frame and the vinyl of the vinyl window to thereby form a space, and the vinyl supporting pipe is fixed in the space by means of the openable vinyl fixing device.

## Description

### [Technical Field]

The present invention relates to an openable vinyl fixing device and a vinyl greenhouse including the same, and more particularly, to a vinyl greenhouse in which an openable window disposed on a roof may be freely opened and closed using an openable vinyl fixing device, and, instead of using an existing system wherein, when a vinyl opening/closing driving unit (an opening/closing unit) is positioned at the lowermost end of a vinyl sheet, a vinyl support pipe does not completely unwind and slightly winds a vinyl sheet of a vinyl window and is positioned at an outer portion of the vinyl window, vinyl is completely unwound by turning a vinyl support pipe a little more when a vinyl window is closed, the vinyl support pipe is positioned between an arc frame and the vinyl sheet of the vinyl window to form a space, and the vinyl support pipe is fixed in the space by the openable vinyl fixing device.

### [Background Art]

For stable growth of crops cultivated inside a vinyl greenhouse, generally, it is necessary to control temperature, humidity, and the like of the inside of the vinyl greenhouse. Accordingly, a structure capable of opening a side surface of a vinyl greenhouse has been developed as disclosed in Korean Patent Application Publication No. 10-2010-0067494 which relates to a vinyl opening/closing device of a vinyl greenhouse.

In such a conventional vinyl greenhouse as disclosed above, entrance doors and side windows can be freely opened and closed, but it is impossible to freely open and close roof windows, and thus, in the summer, when temperatures are high, damage such as occurrence of various blights occurs due to a high-temperature phenomenon, poor ventilation, and lack of moisture inside a vinyl greenhouse.

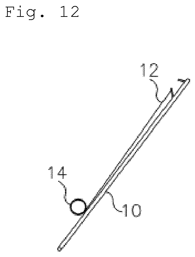

Fig. 12 is a schematic view of a roof window frame part of a conventional vinyl greenhouse. In the conventional vinyl greenhouse, when a vinyl support pipe 14, driven by a vinyl opening/closing driving unit, is positioned at the lowermost end of the roof window frame part, as illustrated in Fig. 12, a vinyl window is completely closed, and, in this case, an openable vinyl sheet 12 is not completely unwound but unwound slightly less. Thus, during wind or rain, the vinyl support pipe 14 and the openable vinyl sheet 12 shake, and thus are tied with a string to prevent this. Such an existing system has been used to date and, in particular, it is still difficult to freely open or close a roof window.

In addition, conventional vinyl greenhouses are used for many years after installation until the vinyl is damaged. In this regard, damage due to accumulation of salts in soil and sluggish growth problems due to decrease in light transmittance as vinyl wears out have not been solved.

### [Disclosure]

### [Technical Problem]

Therefore, the present invention has been made in view of the above problems, and it is one object of the present invention to provide an openable vinyl fixing device and a vinyl greenhouse, in which, instead of using the above-described existing system, a vinyl support pipe is turned so that an openable vinyl sheet is completely unwound, and further turned to wind the openable vinyl sheet in the opposite direction, thereby forming a space between a vinyl greenhouse frame part and the openable vinyl sheet, and a fixing device is installed in the space to freely and conveniently open and close both a side vinyl sheet and a roof vinyl sheet simply.

It is another object of the present invention to provide a vinyl greenhouse in which an openable vinyl fixing device used to open and close a roof vinyl sheet and a side vinyl sheet moves upward or downward in cooperation with driving of a vinyl support pipe, whereby the vinyl sheet is conveniently opened or closed.

The above objects and various advantages of the present invention will become more apparent from exemplary embodiments of the present invention by those skilled in the art.

### [Technical Solution]

In accordance with one aspect of the present invention, provided is an openable vinyl fixing device detachably fixing a lower portion of an openable vinyl sheet of a vinyl greenhouse to arc frames to thereby maintain a state in which the openable vinyl sheet is closed, wherein an upper end of the openable vinyl sheet is fixed to a vinyl support pad, and a lower end thereof is coupled to a vinyl support pipe, and the openable vinyl fixing device includes: a fixing main body including a pad insertion groove into which the vinyl support pad is inserted, having, on one side thereof, a pipe coupling groove rotatably coupled to the arc frames about the pad insertion groove, and provided, at a front end thereof, with a support pipe engagement protrusion engaged with and coupled to the vinyl support pipe; and an elastic member supporting the fixing main body so as to elastically move upward or downward with respect to the arc frames.

According to one embodiment, the fixing main body is provided, at an upper surface thereof, with a support pipe guide surface having a curved shape to guide movement of the vinyl support pipe when the vinyl support pipe moves upward or downward.

According to one embodiment, the fixing main body is provided, at another side surface thereof, with a support pipe engagement surface recessed to a certain depth about the pad insertion groove in an inner direction, from which the support pipe engagement protrusion extends upward.

According to one embodiment, the pad insertion groove is provided, at an inner wall surface of one side thereof, with a pad seating surface protruding inwards to correspond to a shape of the vinyl support pad, the pad seating surface being seated on an upper surface of the vinyl support pad and the vinyl support pad and the support pipe guide surface being connected to each other, when the fixing main body moves downward by movement of the vinyl support pipe.

According to one embodiment, the openable vinyl fixing device further includes a vinyl protection plate horizontally extending and formed in a certain area on the support pipe guide surface to prevent damage to vinyl when the fixing main body moves upward or downward.

According to one embodiment, the openable vinyl fixing device includes: a movement restricting groove penetratively formed at a plate surface of the fixing main body to a certain length in an upper or lower movement direction thereof; and a movement restricting shaft inserted into the arc frames via the movement restricting groove to limit a range of an upward or downward movement of the fixing main body by movement of the vinyl support pipe.

In accordance with another aspect of the present invention, provided is a vinyl greenhouse including: a frame part having a plurality of arc frames arranged in a length direction and horizontal frames connecting the arc frames with each other; a plurality of vinyl support pad parts arranged along the arc frames with constant intervals therebetween to fix vinyl; a fixed vinyl part fixed and coupled between neighboring ones of the vinyl support pad parts; an openable vinyl part disposed next to the fixed vinyl part, an upper end of the openable vinyl part being fixed to the vinyl support pad part and a lower end thereof being coupled to a vinyl support pipe; a vinyl opening/closing driving unit coupled to the vinyl support pipe to rotate the vinyl support pipe forward or backward so that the openable vinyl part is opened or closed with respect to the frame part; and the above-described openable vinyl fixing device.

In accordance with another aspect of the present invention, provided is a vinyl greenhouse including a vinyl greenhouse frame part to form a frame of the vinyl greenhouse, a vinyl support pipe, a vinyl opening/closing driving unit to drive the vinyl support pipe, and an openable vinyl sheet, one side of the openable vinyl sheet being connected to the vinyl support pipe and another side thereof being connected to the vinyl support pipe, wherein the vinyl opening/closing driving unit rotates the vinyl support pipe so that the openable vinyl sheet is completely unwound, when closing a vinyl window of the vinyl greenhouse, and then further turns more the vinyl support pipe so that the openable vinyl sheet is wound upward in the opposite direction, thereby forming a space between the vinyl greenhouse frame part and the openable vinyl sheet, and the vinyl support pipe is fixed to an openable vinyl fixing device installed in the space.

### [Advantageous effects]

As is apparent from the fore-going description, the present invention advantageously provides a vinyl greenhouse in which an upper roof window and a lower roof window are openably disposed on a roof, and include an upper openable vinyl sheet and a middle openable vinyl sheet, respectively, and each of the upper and lower roof windows includes an openable vinyl fixing device at a lower portion thereof.

The openable vinyl fixing device allows a support pipe to smoothly move without inhibiting movement thereof while elastically moving backward or forward by a load of the support pipe. Accordingly, the upper and lower roof windows may be opened and closed with less force.

Thus, a user may freely open or close the upper and lower roof windows at a desired time manually or automatically.

Meanwhile, a distance by which the openable vinyl fixing device moves upward or downward is limited by a movement restricting groove. In addition, a vinyl protection plate is formed in a certain area at an upper surface of the openable vinyl fixing device, and thus contacts an openable vinyl sheet when the openable vinyl fixing device moves upward or downward and prevents damage to the openable vinyl sheet.

### [Description of Drawings]

The above and other objects, features and other advantages of the present invention will be more clearly understood from the following detailed description taken in conjunction with the accompanying drawings, in which:
Fig. 1 is a perspective view illustrating a structure in which all openable vinyl parts of a vinyl greenhouse according to the present invention are opened;
Fig. 2 is a front view illustrating a structure of a vinyl greenhouse according to the present invention;
Fig. 3 is a perspective view illustrating a structure of a vinyl support pad part of a vinyl greenhouse according to the present invention;
Fig. 4 is a perspective view illustrating a structure of an openable vinyl fixing device according to the present invention;
figs. 5 to 7 are views illustrating a process of operating an openable vinyl fixing device according to the present invention;
Fig. 8 is a view illustrating a state in which all openable vinyl parts of a vinyl greenhouse according to the present invention are opened;
Figs. 9 and 10 are views illustrating a process of operating an openable vinyl fixing device according to another embodiment of the present invention;
Fig. 11 is a schematic view of only a roof window frame part of a vinyl greenhouse according to the present invention; and
Fig. 12 is a schematic view of only a roof window frame part of a conventional vinyl greenhouse.

### [Best mode]

For full understanding of the present invention, exemplary embodiments of the present invention will now be described with reference to the accompanying drawings. The embodiments of the present invention can be modified in various forms and the scope of the present invention should not be construed as being limited to the embodiments set forth herein. Thus, shapes and the like of elements in the drawings can be exaggerated for more clear explanation. It should be noted that like reference numerals in the drawings denote like elements. Detailed description of known functions and structures are omitted when it is deemed that they may unnecessarily obscure the essence of the invention.

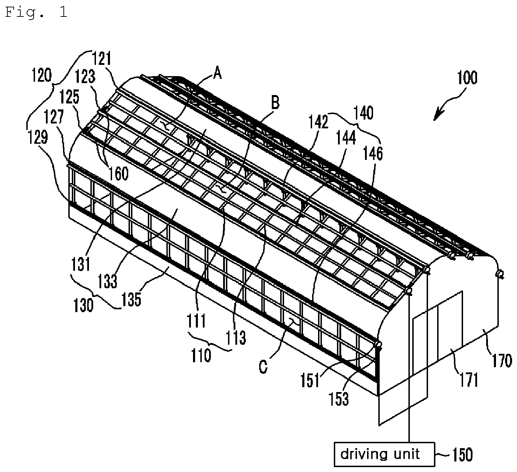

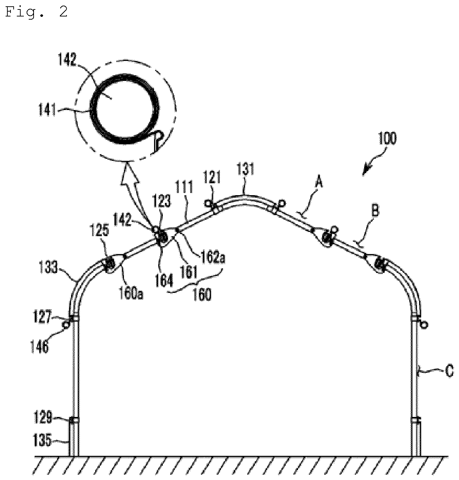

Fig. 1 is a perspective view illustrating a state in which all openable windows A, B, and C of a vinyl greenhouse 100 according to the present invention are opened. Fig. 2 is a view illustrating a structure of an arc frame 111 in which the openable windows A, B, and C of the vinyl greenhouse 100 are opened. As illustrated in the drawings, the vinyl greenhouse 100 according to the present invention includes three openable windows, i.e., an upper roof window A, a lower roof window B, and a side window C. The openable windows A, B, and C are freely opened and closed by an openable vinyl part 140 and openable vinyl fixing devices 160 and 160a. Accordingly, a user may freely open and close the upper and lower roof windows A and B as well as the side window C in consideration of weather, temperature, humidity, and the like.

The vinyl greenhouse 100 according to the present invention includes a frame part 110 to form a frame, a plurality of vinyl support pad parts 120 to fix vinyl to the outside of the frame part 110, a fixed vinyl part 130 fixed between the vinyl support pad parts 120, an openable vinyl part 140 to form the openable windows A, B, and C, a vinyl opening/closing driving unit 150 to provide driving force so that the openable vinyl part 140 is opened or closed, and the openable vinyl fixing devices 160 and 160a to fix the openable vinyl part 140 so as to maintain a state in which the openable vinyl part 140 is closed.

The frame part 110 includes a plurality of arc frames arranged in a length direction and horizontal frames 113 connecting the arc frames 111 to one another. The arc frames 111 are buried under the ground and fixed in position, and fixed to one another by the horizontal frames 113.

The vinyl support pad part 120 supports vinyl to be fixed to the outside of the frame part 110. As illustrated in Fig. 2, the vinyl support pad parts 120 are configured along the arc frames 111. The vinyl support pad parts 120 are configured such that a pair of roof window upper pads 121, a pair of roof window middle pads 123, a pair of roof window lower pads 125, a pair of side window upper pads 127, and a pair of side lower pads 129 are positioned at opposite sides of the arc frames 111 with constant intervals therebetween.

The roof window upper pad 121 fixes an upper fixed vinyl sheet 131 and an upper openable vinyl sheet 141. The roof window middle pad 123 fixes an upper end of a middle openable vinyl sheet 143. The roof window lower pad 125 and the side window upper pad 127 respectively fix opposite ends of a shoulder fixed vinyl sheet 133. In addition, the side window upper pad 127 supports an upper end of a lower openable vinyl sheet 145. The side lower pad 129 fixes an upper portion of a lower fixed vinyl sheet 135.

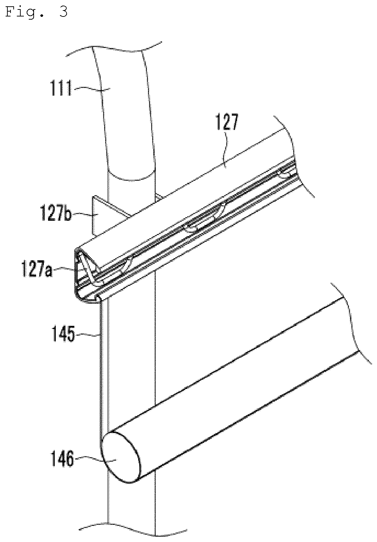

Fig. 3 is a perspective view illustrating a structure of the side window upper pad 127. As illustrated in the drawing, the side window upper pad 127 is horizontally arranged to connect the arc frames 111 to one another. The side window upper pad 127 has an upper opening having a C-shaped cross section. An upper end of the lower openable vinyl sheet 145 is inserted via the upper opening, and a vinyl fixing member 127a is inserted thereinto to pressurize the lower openable vinyl sheet 145. The upper end of the lower openable vinyl sheet 145 is fixed to the inside of the side window upper pad 127 by pressurization of the vinyl fixing member 127a.

The roof window upper pad 121, the roof window middle pad 123, the roof window lower pad 125, and the side lower pad 129 also fix the corresponding vinyl sheet in the same manner as in the side window upper pad 127. In this case, the roof window upper pad 121 contacting with the fixed vinyl sheets 131, 133, 135 and the openable vinyl sheets 141, 143, 145, and the side upper pad 127 fix the corresponding fixed and openable vinyl sheets together.

A user may fix vinyl to the vinyl support pad part 120 by pressurization using the vinyl fixing member 127a, and thus may conveniently replace the vinyl.

The fixed vinyl part 130 is fixed in position without being opened or closed at the frame part 110 of the vinyl greenhouse 100. The vinyl greenhouse 100 of the present invention includes the upper fixed vinyl sheet 131, the shoulder fixed vinyl sheet 133, and the lower fixed vinyl sheet 135. The upper fixed vinyl sheet 131 is formed in a certain area at the uppermost end of the arc frames 111. The shoulder fixed vinyl sheet 133 is formed in a certain area in a region connecting a side surface of the arc frames 111 to the roof thereof. The lower fixed vinyl sheet 135 is formed in a certain area in a side lower region between the arc frames 111 and the ground.

The upper fixed vinyl sheet 131 is fixed to the pair of roof window upper pads 121. Opposite ends of the shoulder fixed vinyl sheet 133 are fixed to the roof window lower pad 125 and the side window upper pad 127, respectively. An upper portion of the lower fixed vinyl sheet 135 is fixed to the side lower pad 129, and a lower portion thereof is buried under the ground.

The openable vinyl part 140 opens or closes the openable windows A, B, and C. The openable vinyl part 140 includes the upper openable vinyl sheet 141 to open or close an upper roof window A, the middle openable window 143 to open or close a lower roof window B, and the lower openable vinyl sheet 145 to open or close a side window C.

An upper end of the upper openable vinyl sheet 141 is fixed to the roof window upper pad 121, and a lower portion thereof is coupled to an upper vinyl support pipe 142. An upper end of the middle openable vinyl sheet 143 is fixed to the roof window middle pad 123, and a lower portion thereof is coupled to a middle vinyl support pipe 144. An upper end of the lower openable vinyl sheet 145 is fixed to the side window upper pad 127, and a lower portion thereof is coupled to a lower vinyl support pipe 146.

The upper, middle and lower vinyl support pipes 142, 144, and 146 are fixed in a state of being wound at lower portions of the upper, middle and lower openable vinyl sheets 141, 143, and 145, respectively. Each of the upper, middle and lower vinyl support pipes 142, 144, and 146 is coupled to the vinyl opening/closing driving unit 150, and rotates forward or backward by driving of the vinyl opening/closing driving unit 150. Once each of the upper, middle and lower vinyl support pipes 142, 144, and 146 rotates in a direction in which vinyl is wound, i.e., upward, by the vinyl opening/closing driving unit 150, the corresponding openable vinyl sheets 141, 143, and 145 are wound on the respective vinyl support pipes 142, 144, and 146 and, accordingly, the openable windows A, B, and C are opened.

On the other hand, when the vinyl opening/closing driving unit 150 is driven in a direction in which the openable vinyl sheets 141, 143, and 145 are closed, the respective vinyl support pipes 142, 144, and 146 unwind the openable vinyl sheets 141, 143, and 145 and, accordingly, the openable windows A, B, and C are covered by the openable vinyl sheets 141, 143, and 145, respectively.

As illustrated in Fig. 1, the vinyl opening/closing driving unit 150 is coupled to each of the upper, middle, and lower vinyl support pipes 142, 144, and 146, and thus the upper, middle, and lower openable vinyl sheets 141, 143, and 145 are wound or unwound by rotating forward or backward the upper, middle, and lower vinyl support pipes 142, 144, and 146, respectively. The vinyl opening/closing driving unit 150 includes an opening/closing main body 151 coupled to the upper, middle, and lower vinyl support pipes 142, 144, and 146, and a lever 153 coupled to the opening/closing main body 151. The opening/closing main body 151 includes a chain gear, and the like inside thereof to rotate the upper, middle, and lower vinyl support pipes 142, 144, and 146.

In this case, the vinyl opening/closing driving unit 150 may automatically operate by a driving force of a motor, or a user may operate the vinyl opening/closing driving unit 150 by directly rotating the lever 153.

In addition, the vinyl opening/closing driving unit 150 may be configured to operate the upper, middle, and lower openable vinyl sheets 141, 143, and 145 independently or simultaneously.

The openable vinyl fixing devices 160 and 160a maintain a state in which the respective openable vinyl sheets 141, 143, and 145 are fixed in a state wherein the openable vinyl part 140 closes the openable windows A, B, and C. When wind or external force is applied, the closed openable vinyl sheets 141, 143, and 145 may flap or deviate from the original position thereof and, as a result, may be torn or damaged. Thus, the openable vinyl fixing devices 160 and 160a are engaged with and coupled to the upper, middle, and lower vinyl support pipes 142, 144, and 146 in a closed state so that the openable vinyl part 140 maintains a stably closed state.

As illustrated in Fig. 1, the openable vinyl fixing devices 160 and 160a are configured in plural with constant intervals therebetween at the arc frames 111. As a distance between the openable vinyl fixing devices 160 and 160a decreases, a fixing force for openable vinyl sheets is enhanced and thus a vinyl greenhouse may be stably maintained even when wind or external force is applied thereto.

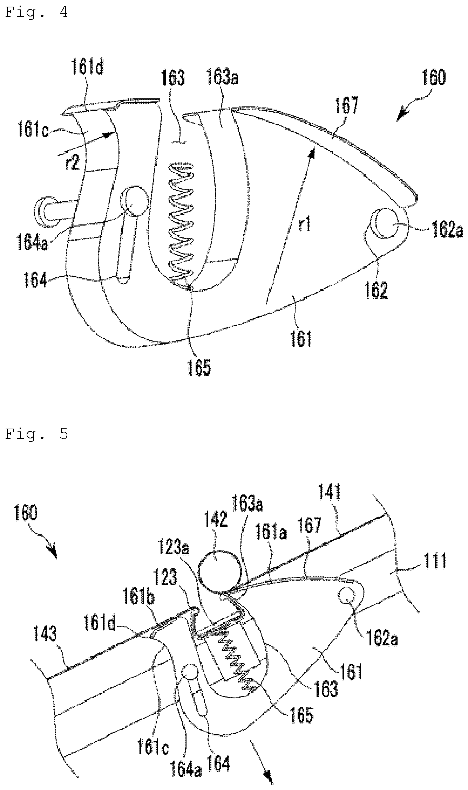

As illustrated in Fig. 4, the openable vinyl fixing devices 160 and 160a include an upper openable vinyl fixing device 160 to fix the upper vinyl support pipe 142 and a middle openable vinyl fixing device 160a to fix the middle vinyl support pipe 144. The upper openable vinyl fixing device 160 and the middle openable vinyl fixing device 160a have the same configuration and operate in the same manner.

The openable vinyl fixing devices 160 and 160a includes a fixing main body 161 rotatably coupled to the arc frames 111, a pipe fixing bolt 162a rotatably supporting the fixing main body 161 on the arc frames 111, a movement restricting shaft 164a to restrict movement distances of the openable vinyl fixing devices 160 and 160a, an elastic member 165 to provide an elastic force so that the fixing main body 161 returns to the initial position, and a vinyl protection plate 167 coupled to an upper surface of the fixing main body 161 to protect the upper, middle, and lower openable vinyl sheets 141, 143, and 145.

Fig. 5 is a view illustrating a process of fixing the upper vinyl support pipe 142 using the upper openable vinyl fixing device 160.

The fixing main body 161 is formed in a streamlined shape in which the width thereof becomes narrower from the front to the rear. The fixing main body 161 is provided, at an upper surface thereof, with a first support pipe guide surface 161a and a second support pipe guide surface 161b. The first and second support pipe guide surfaces 161a and 161b are formed in a curved shape so as to wind or unwind the upper openable vinyl sheet 141 when the upper vinyl support pipe 142 is rotated by the vinyl opening/closing driving unit 150. The first support pipe guide surface 161a is formed as a curved surface having a gentle slope in an inner direction so as not to form resistance when the upper vinyl support pipe 142 winds the upper openable vinyl sheet 141 while moving upward.

The fixing main body 161 is provided, at another side thereof, with a support pipe engagement surface 161c engaged with and coupled to the upper vinyl support pipe 142. The support pipe engagement surface 161c is recessed from a side surface of the fixing main body 161 at a curvature r2 corresponding to the diameter of the upper vinyl support pipe 142. A support pipe engagement protrusion 161d protruding from the side surface of the fixing main body 161 by a certain height is formed at an upper surface of the support pipe engagement surface 161c.

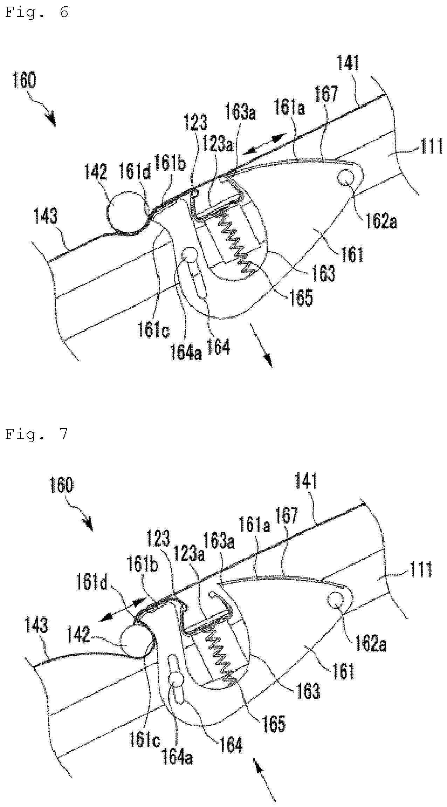

As illustrated in Fig. 7, the support pipe engagement surface 161c and the support pipe engagement protrusion 161d accommodate the upper vinyl support pipe 142 moved along the first support pipe guide surface 161a and the second support pipe guide surface 161b, to be fixed in position. The upper vinyl support pipe 142 is inserted into the recessed support pipe engagement surface 161c, and the protruding support pipe engagement protrusion 161d covers an upper surface of the upper vinyl support pipe 142 to be fixed in position.

The fixing main body 161 is provided, at one side thereof, with a pipe coupling groove 162 to penetrate the fixing main body 161. The pipe fixing bolt 162a is inserted into the pipe coupling groove 162. The pipe fixing bolt 162a penetrates and is inserted into the pipe coupling groove 162 and the arc frame 111. Accordingly, the fixing main body 161 may rotate about the pipe fixing bolt 162a.

The fixing main body 161 is provided, at a plate surface thereof, with a pad insertion groove 163 formed in a certain area into which the vinyl support pad part 120 is inserted. As illustrated in Fig. 4, the upper openable vinyl fixing device 160 is coupled to a lower portion of the roof window middle pad 123. When the upper openable vinyl fixing device 160 moves upward or downward, the roof window middle pad 123 is inserted into the pad insertion groove 163. Accordingly, the pad insertion groove 163 is formed to a width corresponding to the width of the roof window middle pad 123.

The pad insertion groove 163 is provided, at an upper portion of an inner side wall thereof, with a pad seating surface 163a protruding in a central direction towards the roof window middle pad 123. The pad seating surface 163a protrudes to correspond to a shape of the roof window middle pad 123 and thus is seated on an upper surface of the roof window middle pad 123 when the fixing main body 161 moves upward or downward. Accordingly, the roof window middle pad 123 and the fixing main body 161 support each other in contact with each other, and the first support pipe guide surface 161a and the roof window middle pad 123 are smoothly connected to each other.

Thus, the first support pipe guide surface 161a is smoothly connected to the roof window middle pad 123 without occurrence of a step or a raised spot in a connection area therebetween. The upper vinyl support pipe 142 may smoothly move along the first support pipe guide surface 161a and a connection surface connecting the roof window middle pad 123 and the second support pipe guide surface 161b when winding or unwinding the upper openable vinyl sheet 141 along the fixing main body 161.

Meanwhile, the pad insertion groove 163 is provided, at one side thereof, with a movement restricting groove 164 penetratively formed to a certain length along an upper or lower movement direction of the fixing main body 161. The movement restricting shaft 164a is inserted into the movement restricting groove 164 to penetrate the arc frames 111. The movement restricting groove 164 restricts a distance that the fixed main body 161 is moved downward by the weight of the upper vinyl support pipe 142 when the upper vinyl support pipe 142 is moved. Accordingly, the fixing main body 161 may be prevented from escaping from the arc frames 111 or being damaged.

The pad insertion groove 163 is provided with the elastic member 165 that returns the fixing main body 161 moved downward to the initial position. An upper end of the elastic member 165 is fixed to the arc frames 111 to which the roof window middle pad 123 is coupled, and a lower end thereof is fixed to the pad insertion groove 163. The elastic member 165 allows the fixing main body 161, moved downward by the weight of the upper vinyl support pipe 142 when the upper vinyl support pipe 142 is moved, to return to the initial position thereof when the load of the upper vinyl support pipe 142 is removed. The elastic member 165 acts an elastic force in a direction in which the fixing main body 161 moves to an upwardly moved position.

Meanwhile, the vinyl protection plate 167 is coupled in a certain area to the first and second support pipe guide surfaces 161a and 161b of the fixing main body 161. When the fixing main body 161 moves upward or downward, sharp end portions of the first and second support pipe guide surfaces 161a and 161b contact the upper and middle openable vinyl sheets 141 and 143, and, in this case, the vinyl protection plate 167 prevents damage to the corresponding vinyl.

The vinyl protection plate 167 is formed to have a wide area and a smooth curved surface. Accordingly, damage to vinyl to be in contact therewith is prevented.

A process of opening and closing the openable windows A, B, and C of the vinyl greenhouse 100 according to the present invention having such a configuration will now be described with reference to Figs. 1 to 8.

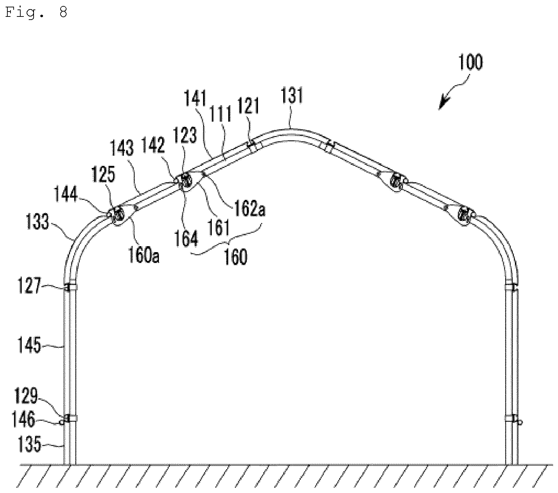

Fig. 8 is a view illustrating a state in which all the openable windows A, B, and C of the vinyl greenhouse 100 according to the present invention are closed. As illustrated in the drawing, the upper roof window A is closed by the upper openable vinyl sheet 141, the lower roof window B is closed by the middle openable vinyl sheet 143, and the side window C is closed by the lower openable vinyl sheet 145.

In this case, the upper vinyl support pipe 142 of the upper openable vinyl sheet 141 is fixed by the upper openable vinyl fixing device 160, and the middle vinyl support pipe 144 of the middle openable vinyl sheet 143 is fixed by the lower openable vinyl fixing device 160a.

As illustrated in Fig. 7, the upper vinyl support pipe 142 is engaged with and coupled between the support pipe engagement surface 161c and the support pipe engagement protrusion 161d of the fixing main body 161 to be fixed in position. In this regard, an insertion hole (not shown), through which the second support pipe guide surface 161b of the fixing main body 161 is inserted, is penetratively formed at a plate surface of the middle openable vinyl sheet 143 coupled to the roof window middle pad 123 inserted into the pad insertion groove 163 of the fixing main body 161. The fixing main body 161 moves through the middle openable vinyl sheet 143 when moving upward or downward.

The middle vinyl support pipe 144 is fixed to the lower openable vinyl fixing device 160a in the same manner as described above.

In this state, when a user operates the vinyl opening/closing driving unit 150 to open the openable windows A, B, and C, the upper, middle, and lower vinyl support pipes 142, 144, and 146 move upward, thereby winding the upper, middle, and lower openable vinyl sheets 141, 143, and 145.

The upper and middle vinyl support pipes 142 and 144 escape from the support pipe engagement protrusion 161d and the support pipe engagement surface 161c by clockwise rotation in the state of Fig. 7, and then move upward along the second support pipe guide surface 161b.

The upper vinyl support pipe 142 is forcibly moved while rotating by a driving force of the vinyl opening/closing driving unit 150, and the fixing main body 161 moves backward while rotating downward about the pipe fixing bolt 162a, by the weight of the upper vinyl support pipe 142.

Accordingly, as illustrated in Fig. 6, the first and second support pipe guide surfaces 161a and 161b of the fixing main body 161 move backward to the same height as that of the roof window middle pad 123. The pad seating surface 163a is seated on an upper portion of the first support pipe guide surface 161a and a connection surface is formed. The upper vinyl support pipe 142 moves beyond the height of the roof window middle pad 123 while the fixing main body 161 moves backward. Even in this state, the second support pipe guide surface 161b, the roof window middle pad 123, and the first support pipe guide surface 161a form an overall smooth inclined surface, and thus, the upper vinyl support pipe 142 may smoothly move with less force. Thus, labor may be minimized even though a user manually operates the openable windows A, B, and C.

Meanwhile, as illustrated in Fig. 7, when the upper vinyl support pipe 142 moves to the first support pipe guide surface 161a by passing the roof window middle pad 123, a load applied to the fixing main body 161 is the greatest, and thus, the fixing main body 161 moves downward as much as possible. In this regard, the fixing main body 161 moves along the movement restricting groove 164 about the movement restricting shaft 164a and a distance by which the fixing main body 161 is moved is limited.

The upper vinyl support pipe 142 moves upward via the fixing main body 161 while winding the upper openable vinyl sheet 141 on a surface thereof, thereby opening the roof upper window A as illustrated in Fig. 2. In the same manner as described above, the roof lower window B and the side window C may also be opened.

In this regard, a degree to which the upper roof window A, the lower roof window B, and the side window C are opened may be adjusted by a degree to which the vinyl opening/closing driving unit 150 is driven. When the openable windows A, B, and C are completely opened, as illustrated in Fig. 2, the vinyl support pipes 142, 144, and 146 are engaged with and supported on the support pipe engagement protrusion 161d.

In addition, a gear inside the opening/closing main body 151 of the vinyl opening/closing driving unit 150 holds the upper, middle, and lower vinyl support pipes 142, 144, and 146, and thus a state in which the upper roof window A, the lower roof window B, and the side window C are opened may be stably maintained.

Meanwhile, the opened openable windows A, B, and C may be closed such that a user drives the vinyl opening/closing driving unit 150 in a reverse direction. Accordingly, as illustrated in Fig. 5, the upper vinyl support pipe 142 moves along the arc frames 111 while rotating downward, and is unwound, thereby closing the roof upper window A.

The upper vinyl support pipe 142 moves along the first support pipe guide surface 161a and the fixing main body 161 moves backward while rotating about the pipe fixing bolt 162a, by the load of the upper vinyl support pipe 142. In addition, as illustrated in Fig. 6, the upper vinyl support pipe 142 moves along the second support pipe guide surface 161b and the fixing main body 161 is pressurized by the upper openable vinyl sheet 141, whereby a state in which the fixing main body 161 is moved backward is maintained.

As illustrated in Fig. 7, the upper vinyl support pipe 142 moves to the support pipe engagement surface 161c via the second support pipe guide surface 161b and is engaged with and coupled to the support pipe engagement protrusion 161d. In this case, when the load of the upper vinyl support pipe 142 applied to the fixing main body 161 is removed, the fixing main body 161 returns upward by the elastic force of the elastic member 165. Accordingly, the movement restricting shaft 164a moves to the lowermost portion of the movement restricting groove 164.

### [Mode]

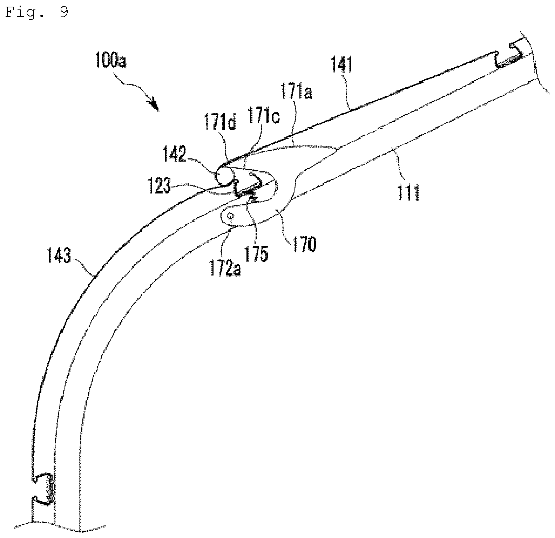

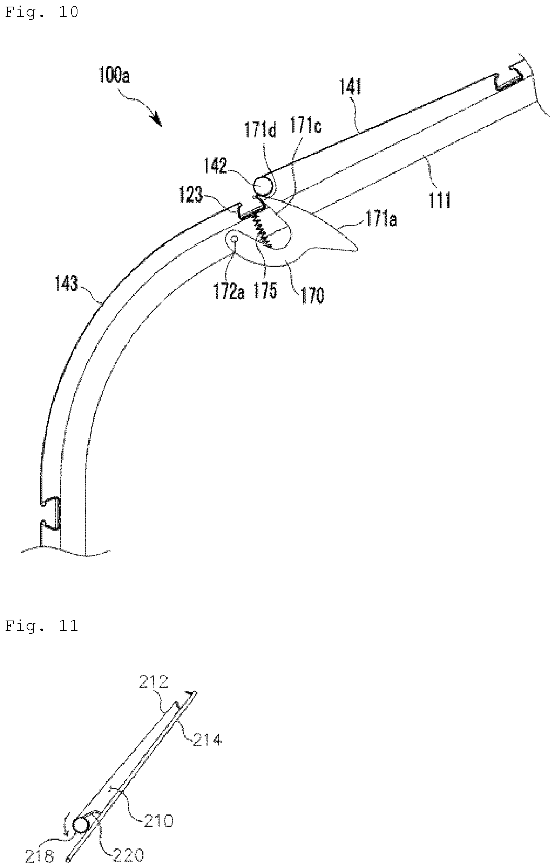

Figs. 9 and 10 are views illustrating a process of operating an openable vinyl fixing device 170 according to another embodiment of the present invention.

In the above-described openable vinyl fixing devices 160 and 160a according to an exemplary embodiment, the pipe fixing bolt 162a is installed in a direction in which an openable vinyl sheet is opened. That is, the pipe fixing bolt 162a is installed in an upper direction of the arc frames 111.

In contrast, in the openable vinyl fixing device 160 and 160a according to another embodiment, the pipe fixing bolt 162a is installed in a direction in which an openable vinyl sheet is closed. That is, the pipe fixing bolt 162a is installed in a lower direction of the arc frames 111. In this case, a support pipe engagement protrusion 171d is formed inside a pad insertion groove 171c, and thus the vinyl support pipe 142 is engaged therewith and coupled thereto inside the pad insertion groove 171c.

Fig. 11 is a schematic view illustrating only a roof window frame part of a vinyl greenhouse, to explain the concept of the present invention. The vinyl opening/closing driving unit 150 (see Fig. 1) rotates a vinyl support pipe 218 so that an openable vinyl sheet 212 is completely unwound, when closing a vinyl window of a vinyl greenhouse, and then further turns more the vinyl support pipe 218 so that the openable vinyl sheet 212 is wound upward in the opposite direction as an arrow direction of Fig. 12, thereby forming a space 210 between a vinyl greenhouse frame part 214 and the openable vinyl sheet 212. Once the space 210 is formed, an openable vinyl fixing device 220 may be installed in the space 210, and the vinyl support pipe 218 may be automatically fixed to the openable vinyl fixing device 220 only by rotation of the vinyl support pipe 218 in an arrow direction of Fig. 11.

A vinyl window is opened such that the vinyl support pipe 218 escapes from the openable vinyl fixing device 220 only by rotation of the vinyl support pipe 218 in a direction opposite to the arrow of Fig. 11 and is continuously rotated to thereby wind the openable vinyl sheet 212 upward in a direction opposite to the arrow.

As described above, a vinyl greenhouse according to the present invention includes an upper roof window and a lower roof window that are openably disposed on a roof, and the upper roof window and the lower roof window include an upper openable vinyl sheet and a middle openable vinyl sheet, respectively. An openable vinyl fixing device is disposed at a lower portion of each of the upper and lower roof windows.

The openable vinyl fixing device allows a support pipe to smoothly move without inhibiting movement thereof while elastically moving backward or forward by a load of the support pipe. Accordingly, the upper and lower roof windows may be opened and closed with less force.

Thus, a user may freely open or close the upper and lower roof windows at a desired time manually or automatically.

Meanwhile, a distance by which the openable vinyl fixing device moves upward or downward is limited by a movement restricting groove. In addition, a vinyl protection plate is formed in a certain area at an upper surface of the openable vinyl fixing device, and thus contacts an openable vinyl sheet when the openable vinyl fixing device moves upward or downward and prevents damage to the openable vinyl sheet.

A vinyl greenhouse of the present invention has been described with reference to embodiments thereof for illustrative purposes, and it will be well understood by one of ordinary skill in the art to which the present invention pertains that various modifications and other embodiments equivalent thereto may be derived therefrom. Therefore, it is obvious that the present invention should not be construed as being limited to the forms in the above detailed description. Thus, the technical scope of the present invention should be defined by the technical spirit of the appended claims. In addition, all modifications, equivalents thereto, and substitutions therefor should be understood as being within the spirit and scope of the present invention as defined by the appended claims.

### [Industrial Applicability]

The present invention relates to an openable vinyl fixing device and a vinyl greenhouse including the same, and may be applied to vinyl greenhouse manufacture and installation.

## Claims

1. An openable vinyl fixing device detachably fixing a lower portion of an openable vinyl sheet of a vinyl greenhouse to arc frames to thereby maintain a state in which the openable vinyl sheet is closed,
wherein an upper end of the openable vinyl sheet is fixed to a vinyl support pad, and a lower end thereof is coupled to a vinyl support pipe, and
the openable vinyl fixing device comprises:
a fixing main body comprising a pad insertion groove into which the vinyl support pad is inserted, having, on one side thereof, a pipe coupling groove rotatably coupled to the arc frames about the pad insertion groove, and provided, at a front end thereof, with a support pipe engagement protrusion engaged with and coupled to the vinyl support pipe; and
an elastic member supporting the fixing main body so as to elastically move upward or downward with respect to the arc frames.

2. The openable vinyl fixing device according to claim 1, wherein the fixing main body is provided, at an upper surface thereof, with a support pipe guide surface having a curved shape to guide movement of the vinyl support pipe when the vinyl support pipe moves upward or downward.

3. The openable vinyl fixing device according to claim 2, wherein the fixing main body is provided, at another side surface thereof, with a support pipe engagement surface recessed to a certain depth about the pad insertion groove in an inner direction, from which the support pipe engagement protrusion extends upward.

4. The openable vinyl fixing device according to claim 3, wherein the pad insertion groove is provided, at an inner wall surface of one side thereof, with a pad seating surface protruding inwards to correspond to a shape of the vinyl support pad, the pad seating surface being seated on an upper surface of the vinyl support pad and the vinyl support pad and the support pipe guide surface being connected to each other, when the fixing main body moves downward by movement of the vinyl support pipe.

5. The openable vinyl fixing device according to claim 4, further comprising a vinyl protection plate horizontally extending and formed in a certain area on the support pipe guide surface to prevent damage to vinyl when the fixing main body moves upward or downward.

6. The openable vinyl fixing device according to claim 5, wherein the openable vinyl fixing device comprises: a movement restricting groove penetratively formed at a plate surface of the fixing main body to a certain length in an upper or lower movement direction thereof; and a movement restricting shaft inserted into the arc frames via the movement restricting groove to limit a range of an upward or downward movement of the fixing main body by movement of the vinyl support pipe.

7. A vinyl greenhouse comprising:
a frame part having a plurality of arc frames arranged in a length direction and horizontal frames connecting the arc frames with each other;
a plurality of vinyl support pad parts arranged along the arc frames with constant intervals therebetween to fix vinyl;
a fixed vinyl part fixed and coupled between neighboring ones of the vinyl support pad parts;
an openable vinyl part disposed next to the fixed vinyl part, an upper end of the openable vinyl part being fixed to the vinyl support pad part and a lower end thereof being coupled to a vinyl support pipe;
a vinyl opening/closing driving unit coupled to the vinyl support pipe to rotate the vinyl support pipe forward or backward so that the openable vinyl part is opened or closed with respect to the frame part; and
the openable vinyl fixing device according to any one of claims 1 to 6.

8. A vinyl greenhouse comprising a vinyl greenhouse frame part to form a frame of the vinyl greenhouse, a vinyl support pipe, a vinyl opening/closing driving unit to drive the vinyl support pipe, and an openable vinyl sheet, one side of the openable vinyl sheet being connected to the vinyl support pipe and another side thereof being connected to the vinyl support pipe,
wherein the vinyl opening/closing driving unit rotates the vinyl support pipe so that the openable vinyl sheet is completely unwound, when closing a vinyl window of the vinyl greenhouse, and then further turns more the vinyl support pipe so that the openable vinyl sheet is wound upward in the opposite direction, thereby forming a space between the vinyl greenhouse frame part and the openable vinyl sheet, and the vinyl support pipe is fixed to an openable vinyl fixing device installed in the space.
